# EUROPÄISCHE PATENTANMELDUNG

(11) **EP 0 769 759 A2**
(43) Veröffentlichungstag der Anmeldung: **23.04.1997**
(21) Anmeldenummer: 96116537.0
(22) Anmeldetag: 16.10.1996
(51) Int. Cl.: G06K 19/077

(54) **Kontaktlose Chipkarte**

(30) Priorität: 19.10.1995 DE 19538917
(71) Anmelder: JUNGHANS UHREN GMBH, 78713 Schramberg (DE)
(72) Erfinder: Lechner, Thomas, Dr., 78144 Tennenbronn (DE); Allgaier, Jürgen, 78730 Lauterbach (DE)
(74) Vertreter: Hofmann, Gerhard, Dipl.-Ing. Patentassessor

(57) **Zusammenfassung**

Eine kontaktlose Chipkarte (22) läßt sich wesentlich verkleinern, ohne den erforderlichen Leseabstand für beispielsweise Übermittlung einer Transponderinformation an ein Abfragegerät entsprechend verringern zu müssen und ohne dadurch eine von verringerter Güte der Resonanzkurve abhängige Impedanzerhöhung hinnehmen zu müssen, wenn eine Entkopplung der Spulen-Windungen (24) in dem Sinne erfolgt, daß aufeinanderfolgende Windungen (24) auf jeweils der anderen Kartenseite verlaufen, wobei auch eine Windung (24) auf der einen Kartenseite im wesentlichen ohne radiale Überlappung zwischen zwei benachbarten Windungen (24) auf der anderen Kartenseite verläuft. Dann kann sogar in den Spuleninnenraum der Chipkarte (22) ein Uhrwerk eingesetzt und die Chipkarte (22) damit im Gehäuse einer Armbanduhr untergebracht werden.

## Beschreibung

Die Erfindung betrifft eine kontaktlose Chipkarte gemäß dem Oberbegriff des Anspruches 1.

Eine derartige Chipkarte ist aus der DE 43 02 387 C2 in der Form und Größe einer genormten Scheckkarte bekannt, längs deren Umfanges auf beiden Kartenseiten sich eine Antennen-Flachspule erstreckt. Die besteht aus zwei mehrwindigen Teilspulen, je einer auf jeder Kartenseite. Von denen ist das Ende der einen mit dem gegenüberliegenden Anfang der anderen über eine den Kartenrand überbrückende Kontaktklammer verbunden. Diese Klammer ist an einem längs des Randes der Karte umlaufenden metallischen Versteifungsrahmen ausgebildet. Auf einer Seite der Karte sind im freien Mittenbereich Sende-, Empfangs-, Speicher- und Signalverarbeitungsschaltungen sowie eine Knopfzellen-Batterie angeordnet. Wenn der von der Spule umgebene Innenraum der Karte vom elektromagnetischen Hochfrequenzfeld eines Lesegerätes durchsetzt ist, dessen Trägerfrequenz typisch im oberen Rundfunkfrequenzbereich liegt, wird eine Hochfrequenzspannung in der auf die Abfragefrequenz abgestimmten Antennen-Flachspule induziert und die ihr aufmodulierte Information auf der Karte dekodiert und verarbeitet. Da auch die Versorgungsspannung für die integrierten Schaltungen auf der Karte aus der Hochfrequenzspannung gleichgerichtet werden kann, bedarf es für den Betrieb dieser Karte an sich nicht einmal der Batterie. Zur Übermittlung einer Information an das Lesegerät, bei der es sich in erster Linie um eine Identinformation bezüglich dieser Karte handelt, erfolgt eine Bedämpfung des aufgenommenen Hochfrequenzfeldes im Takte der aus dem Speicher ausgelesenen binärverschlüsselten Identinformation, die ihrerseits nach einer Amplituden-Demodulation im Lesegerät auswertbar ist, wie für einen geometrisch anderen aber technologisch gleichartig arbeitenden Transponder in der EP 0 582 137 A2 näher beschrieben.

Problematisch für verschiedene Anwendungsfälle ist, daß die von der Spule umschlossene Fläche und damit die Karte nicht beliebig verkleinerbar ist, um bei prakabel weitem Abstand zum Lesegerät von dessen Hochfrequenzfeld noch eine hinreichende Induktion in der Flachspule hervorzurufen. Zwar könnte man den Flächenverlust grundsätzlich durch eine erhöhte Windungszahl kompensieren. Je größer die Windungszahl ist, desto größer sind aber die Induktivität und die kapazitive Wechselwirkung zwischen den einzelnen Windungen, was die Resonanzfrequenz und Güte des Schwingkreises auf der Karte herabsetzt. Das führt zu einer Fehlanpassung bezüglich der an die Spule angeschlossenen, abgestimmten Schaltung auf der Karte. Eine solche Fehlanpassung ist in dem Betriebsmodus, bei dem durch Bedämpfung des Abfragefeldes eine Datenübertragung von der Karte zum Lesegerät stattfindet, nicht durch Korrekturnetzwerke kompensierbar.

Dieser hinderliche Effekt wird noch verstärkt, wenn der kleine Innenraum der Spule auf einer verkleinerten Karte im wesentlichen von metallischen Massen gefüllt wird. Das ist etwa der Fall, wenn in das Zentrum der Karte ein Uhrwerk eingesetzt werden soll, um diese kontaktlose Chipkarte z. B. für elektronische Identifikationsvorgänge (wie Entriegeln zur Freigabe einer Tür oder eines Kassenterminals nur für den Berechtigten bzw. unter Protokollierung von Zeit und Identität) im Uhrgehäuse am Arm tragen zu können. Es hat sich gezeigt, daß bei einer Verkleinerung einer herkömmlichen Chipkarte auf den Durchmesser eines üblichen Armbanduhrengehäuses der notwendige Leseabstand auf unter fünf Millimeter zurückgeht, was aber ersichtlich unpraktikabel für die automatische Erfassung der Identinformation der Uhr mittels eines stationären Lesegerätes ist.

In Erkenntnis dieser Gegebenheiten liegt vorliegender Erfindung die technische Problematik zugrunde, eine Chipkarte gattungsgemäßer Art derart auszulegen, daß sie auf einen Bruchteil der üblichen Scheckkartengröße verkleinert und im Zentrum auch noch mit einem Uhrwerk ausgestattet werden kann, ohne dadurch leistungsmindernde Fehlanpassungen oder unpraktikabel kleine Abfragedistanzen in Kauf nehmen zu müssen und insbesondere trotz Verkleinerung des Spulendurchmessers weiterhin die für das Scheckkartenformat eingeführten kontaktlosen Lesegeräte einsetzen zu können.

Diese Aufgabe ist erfindungsgemäß im wesentlichen dadurch gelöst, daß die Chipkarte auch nach dem Kennzeichnungsteil des Hauptanspruches ausgelegt ist.

Gemäß dieser Lösung wird trotz des gedrängten Aufbaus eine optimale Entkopplung der kapazitiven Wechselwirkung zwischen den einzelnen Windungen der Antennen-Flachspule erzielt, indem diese nun nicht mehr zunächst für die eine Spulenhälfte auf der einen Seite und dann für die andere Spulenhälfte auf der anderen Seite der Karte verlaufen; sondern nun wechselt mit jeder Spulenwindung die Spulenlage zwischen den beiden Kartenseiten. Außerdem verlaufen die Windungen auf den beiden Seiten der Karte nicht übereinander, sondern gewissermaßen auf Lücke (d. h. ohne nennenswerte radiale Überdeckung) jeweils eine Windung auf der einen Seite zwischen zwei unter radialer Distanz einander benachbarten Windungen auf der anderen Seite der Karte. Dieser von Windung zu Windung zwischen den beiden Kartenseiten alternierende Spulenverlauf erbringt darüber hinaus den Vorteil, daß der Anstieg der Potentialdifferenz längs der Spule von ihrem Anfang zum Ende geometrisch der Weglänge der Spule entspricht, so daß (im Gegensatz etwa zu einer gängigen, kompakten Luftspule) die nebeneinander angeordneten Windungen der vorliegenden Antennen-Flachspule gewissermaßen auch elektrisch einander benachbart sind. Das führt dazu, daß Anfang und Ende der Spule, zwischen denen also die größte Potentialdifferenz herrscht, räumlich am weitesten voneinander getrennt liegen. Diese Eigenschaften bewirken, daß selbst bei Ausfüllen des Karten-Zentrums durch die große Metallmasse eines Uhrwerkes an der dicht darum herum verlaufenden, abgestimmten Spule keine Verbreiterung der Resonanzkurve und damit kein Anstieg der Impedanz abseits der Resonanzfrequenz mehr eintritt. Die Schaltung auf der Karte ist deshalb nun in ihrer Eingangsimpedanz optimal auf die lose magnetische Kopplung an das Abfragefeld anpaßbar, denn eine betriebsbedingte Fehlanpassung kommt nun nicht mehr vor.

Insgesamt führen diese vorteilhaften Auswirkungen der abwechselnd auf beiden Seiten der Karte verlaufenden Spulenwindungen dazu, daß unter gleichen geometrischen Kartenvoraussetzungen der Leseabstand gegenüber der herkömmlichen Spulentechnologie um fast den Faktor 10 vergrößert wird und damit eine Größenordnung erreicht, für die eine Unterbringung eines induktiven Transponder-Identsystemes auf so extrem kleinem Raum wie einem schmalen Ring im Gehäuse einer Armbanduhr doch noch sinnvoll ist, weil für eine Übermittlung der Identinformation nun kein unpraktikabel kurzer Abstand zum Lesegerät mehr eingehalten sein muß.

Zusätzliche Alternativen und Weiterbildungen sowie weitere Merkmale und Vorteile der Erfindung ergeben sich aus den weiteren Ansprüchen und, auch unter Berücksichtigung der Darlegungen in der abschließenden Zusammenfassung, aus nachstehender Beschreibung eines in der Zeichnung unter Beschränkung auf das Wesentliche angenähert maßstabsgerecht aber stark vergrößert skizzierten bevorzugten Realisierungsbeispiels zur erfindungsgemäßen Lösung. In der Zeichnung zeigt:
Fig. 1 eine Chipkarte mit umlaufender Antennenspule in Ansicht gegen ihre Bestückungsseite
Fig. 2 die Chipkarte nach Fig. 1 in Ansicht gegen ihre Rückseite und

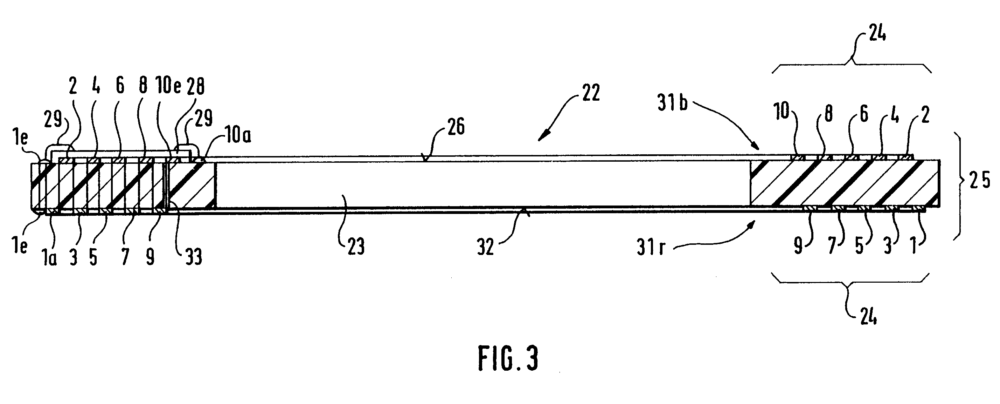

Fig. 3 in Prizipdarstellung den Schnitt III in Fig. 1

Die in der Zeichnung dargestellte Smartcard-Chipkarte 22 umgibt ringförmig eine zentrale Öffnung 23 von standardisierter Umrißform zur Aufnahme eines kleinen Armbanduhren-Werkes (in der Zeichnung nicht dargestellt). Um den Durchmesser des Armbanduhrengehäuses nicht wesentlich größer als die größte Diametral-Abmessung des Werkes und damit seiner Aufnahme-Öffnung 23 in der Chipkarte 22 machen zu müssen, ist die Chipkarte 22 so schmal wie möglich ausgebildet - gerade von solcher Ringbreite, daß im schmalsten Bereich noch die Hälfte der Spulenwindungen 24 einer Antennenspule 25 auf der Plattenoberfläche nebeneinander untergebracht werden kann. Diese Spulenwindungen 24 sind als auf Material mit möglichst kleiner Dielektrizitätskonstante (wie Karton) aufgeklebte Drahtstücke oder als auf Isolierstoffträger aufkaschierte Leiterbahnen ausgebildet. Wenigstens auf der Bestückungsseite 26 der Chipkarte 22 ist diese mit einer die Windungs-Leiterbahnen 24 der Flachspule 25 überdeckenden Isolierschicht 27 ausgestattet, die zweckmäßigerweise zugleich Lötstoppfunktion aufweist. Dadurch können Bauelemente 28 wie insbesondere der Chip einer integrierten Speicher- und Abfrage-Schaltung direkt über den Leiterbahnen auf die Bestückungsseite 26 der Chipkarte 22 montiert und mittels Bonddrähten 29 an die Enden 30 der Flachspule 25 elektrisch angeschlossen werden.

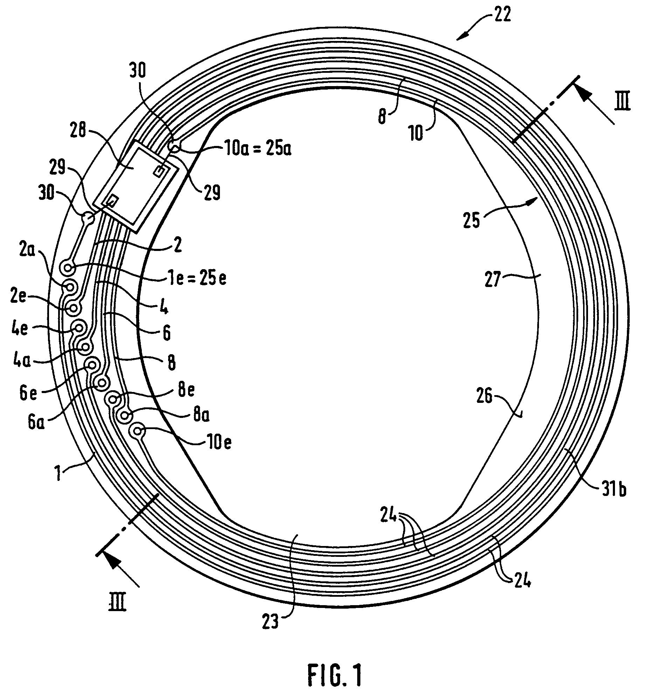

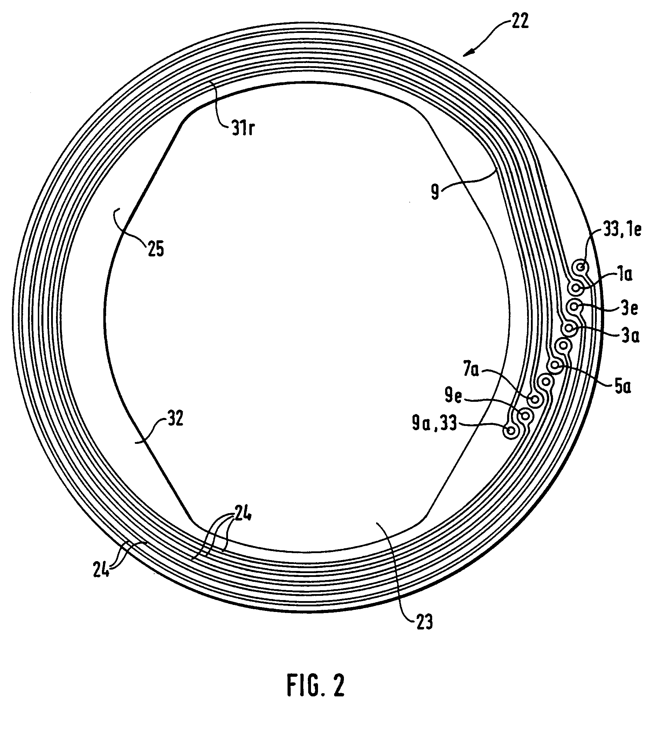

Die Antennen-Flachspule 25 besteht aus zwei Lagen 31b, 31r, je einer auf der Bestückungsseite 26 und auf der Rückseite 32 der Chipkarte 22, deren zentrale Öffnung 23 umgebend. Jede Halbspule, also jede Lage 31 der Flachspule 25, besteht aus mehreren distanziert nebeneinanderliegenden, um das Zentrum der Öffnung 23 herum verlaufenden Kreisbögen 1, 3, 5, 7 und 9 auf der Bestückungsseite 26 und 2, 4, 6, 8 und 10 auf der Rückseite 32. Die Windungen müssen nicht im wesentlichen konzentrisch-kreisbogenförmig verlaufen; im breiteren Ringbereich der Karte 22 sind sie zweckmäßigerweise mit entsprechend verbreiterten Abständen über diese größere Breite verteilt. Jeder der Kreisbögen 1,...,9 durchläuft etwas mehr als einen Vollkreis, so daß für alle (bis auf die letzte Kreisbahn 10) Anfang a und Ende e jeder Windung 24 einander in der jeweiligen Ebene zwar übergreifend aber ohne Berührung dicht nebeneinander liegen, wie in Fig. 1 bzw. Fig. 2 links bzw. rechts erkennbar. Hier geht der einzelne, eine Spulenwindung 24 darstellende, Kreisbogen (z. B. bei 3e) mittels eines durchkontaktierten Loches 33 auf die gegenüberliegende Trägerplatten-Seite über, um dort auf den Anfang eines weiteren solchen Kreisbogens (z. B. 4a) zu treffen. So wechseln sich im Verlauf der Flachspule 25 die kreisförmigen Verläufe der Leiterbahnen mit jeder der beiden Lagen 31 auf den beiden Seiten der Chipkarte 22 ab. Dabei verlaufen die aufeinanderfolgenden Kreisbögen der Windungen 24 auf den beiden Seiten der Chipkarte 22 aber nicht paarweise unter dem selben Radius, also einander axial gegenüber; sondern deren Verlauf ist gewissermaßen auf Lücke versetzt, so daß stets zwischen zwei Kreisbögen (z. B. 2 - 4) auf der einen Seite 26 der Chipkarte 22 ein Kreisbogen (z. B. 3) auf der gegenüberliegenden Chipkartenseite 32 verläuft. Nur das Ende 10e des ersten (oder letzten) Kreisbogens 10 auf der Bestückungsseite 26 verläuft nicht bis in unmittelbarer Nachbarschaft jenseits seines Anfangs 10a, sondern dieser Kreisbogen 10 endet in peripherem Abstand von seinem Anfang 10a. Dadurch ist zwischen dem durchkontaktierten Ende 1e des ersten Bogens 1 und dem Anfang 10a des letzten Kreisbogens 10 auf der Bestückungsseite 26 der Chipkarte 22 der Abstand definiert, in den, über der Isolierschicht 27 das Bauelement 28 aufgebracht (etwa aufgeklebt) wird, um es mit Bonddrähten 29 an den Anfang und an das Ende 25a, 25e dieser Antennen-Flach-Spule 25 anzuschließen.

So ist trotz sehr kleiner Spulenquerschnittsfläche, die dazu noch im wesentlichen durch die Metallmasse eines Uhrwerks ausgefüllt ist, mit der Flachspule 25 eine lose induktive Kopplung zur Abfrageantenne des Lesegerätes über eine Distanz realisierbar, wie sie herkömmlicherweise nur mit den viel größeren Spulenflächen einer Smartcard im Scheckkartenformat realisierbar war; mit dem weiteren betriebstechnischen Vorteil, daß aufgrund der kapazitiven Entkopplung der einzelnen, abwechselnd auf beiden Seiten der Chipkarte 22 verlaufenden Spulenwindungen 24 ein fester Abgleich der Eingangsschaltung auf der Chipkarte 22 möglich ist, weil im Betrieb praktisch keine Impedanzerhöhung durch eine Güteverringerung der frequenzabgeglichenen Flachspule 25 mehr auftritt.

## Patentansprüche

1. Kontaktlose Chipkarte (22) mit einer Antennen-Flachspule (25), die sich über beide Seiten der Chipkarte (22) längs deren Randes erstreckt,
**dadurch gekennzeichnet**,
daß die einzelnen Windungen (1...10) der Flachspule (25) von Windung zu Windung (24) abwechselnd auf beiden Seiten der Chipkarte (22) verlaufen und mittels durchkontaktierter Löcher (33) in Serie geschaltet sind.

2. Chipkarte nach Anspruch 1,
**dadurch gekennzeichnet**,
daß eine Windung (24) auf einer Seite im wesentlichen ohne radiale Überlappung im radialen Zwischenraum zwischen zwei einander benachbarten Windungen (24) auf der axial gegenüberliegenden Seite der Chipkarte (22) verläuft.

3. Chipkarte nach Anspruch 1 oder 2,
**dadurch gekennzeichnet**,
daß Anfang und Ende der Flachspule (25) radial beiderseits der Windungen (24) auf einer Seite (26) der Chipkarte (25) schaltungsmäßig zugänglich sind.

4. Chipkarte nach Anspruch 3,
**dadurch gekennzeichnet**,
daß sie wenigstens auf ihrer Bestückungs-Seite (26), die Windungen (24) im Bereich zwischen Anfang und Ende der Flachspule (25) überdeckend, mit einer Isolierschicht (27) ausgestattet ist, über der ein Bauelement (28) angeordnet und an die Enden der Flachspule (25) angeschlossen ist.

5. Chipkarte nach einem der vorangehenden Ansprüche,
**dadurch gekennzeichnet**,
daß - mit Ausnahme der ersten oder der letzten Windung - der Anfang einer Windung (24) auf einer Kartenseite axial gegenüber dem Ende der nächstfolgenden Windung (24) auf der anderen Seite der Karte (22) liegt, die zur Verbindung der Windungen (24) durchkontaktiert ist.

6. Chipkarte nach Anspruch 5,
**dadurch gekennzeichnet**,
daß die Windungen (24) - mit Ausnahme der ersten oder letzten Spulenwindung - sich jeweils winkelmäßig über etwas mehr als einen Vollkreis erstrecken, wobei die peripher einander übergreifenden Anfänge und Enden einer jeden Windung (24) auch radial gegeneinander versetzt sind.
